# EUROPÄISCHE PATENTANMELDUNG

(11) **EP 3 495 081 A1**
(43) Veröffentlichungstag der Anmeldung: **12.06.2019**
(21) Anmeldenummer: 18207762.8
(22) Anmeldetag: 22.11.2018
(51) Int. Cl.: B23K 1/005

(54) **VERFAHREN ZUM ZUSAMMENFÜGEN VON ZUBEHÖRTEILEN VON DACHENTWÄSSERUNGSKOMPONENTEN UND DAMIT ZUSAMMENGEFÜGTE ZUBEHÖRTEILE**

(30) Priorität: 06.12.2017 DE 102017222090
(71) Anmelder: Metallwarenfabrik Marktoberdorf GmbH & Co. KG, 87616 Marktoberdorf (DE)
(72) Erfinder: GROTZ, Jürgen, 87487 Wiggensbach (DE)
(74) Vertreter: Tiesmeyer, Johannes

(57) **Zusammenfassung**

Die vorliegende Erfindung betrifft ein Verfahren zum Herstellen von Zubehörteilen von Dachentwässerungskomponenten mittels eines Laserlöt-Prozesses, umfassend die folgenden Schritte: Bereitstellen von wenigstens zwei vorgeformten Blechteilen (110, 112) mit komplementären Konturen; Ausrichten der wenigstens zwei Blechteile (110, 112) derart, dass ihre Konturen eine im Wesentlichen stetige Gesamtkontur bilden, wobei die Blechteile (110, 112) paarweise in wenigstens einem vorbestimmen Stoßabstand (A) ausgerichtet werden; Durchführen eines Laserlötens zur Verbindung der wenigstens zwei Blechteile (110, 112) entlang des wenigstens einen Stoßabstands (A) unter Verwendung eines durch einen Laserstrahl (126) aufzuschmelzenden Lotmaterials (114a). Des Weiteren betrifft die Erfindung ein durch ein derartiges Verfahren hergestelltes Zubehörteil einer Dachentwässerungskomponente.

## Beschreibung

Die vorliegende Erfindung betrifft ein Verfahren zum Herstellen von Zubehörteilen von Dachentwässerungskomponenten mittels eines Laserlöt-Prozesses, sowie mittels eines derartigen Verfahrens hergestellte Zubehörteile von Dachentwässerungskomponenten.

Bei den genannten Zubehörteilen von Dachentwässerungskomponenten kann es sich beispielsweise um Rohrbögen, Einhangstutzen, Rinnenwinkel und Regenfallrohre handeln, die aus wetterfesten Materialien, wie beispielsweise verzinktem oder farbbeschichtetem Stahl oder einem Titan-Zink-Material, hergestellt sind und an der Außenseite von Gebäuden Dachrinnensysteme bilden, mittels derer auf dem Dach anfallender Niederschlag in eine Kanalisation geleitet werden kann. Derartige Dachrinnensysteme werden in der Regel mit halbkreisförmigem oder kastenförmigem Querschnitt hergestellt, wobei in jüngerer Zeit steigende Ansprüche an das optische Erscheinungsbild dieser Systeme am Markt zu beobachten sind.

Aus dem Stand der Technik sind im Wesentlichen vier Verfahren bekannt, mittels derer bisher derartige Zubehörteile für die Dachentwässerung aus Blechteilen zusammengefügt worden sind. Es handelt sich hierbei um das Weichlöten per Hand, das Fügen der Teile mittels einer Falztechnik, das Rollnahtschweißen mit Überlappstoß und das Lichtbogenschweißen. Jedes dieser Verfahren weist jedoch für sich Nachteile auf, die zu einem Bedarf nach einem verbesserten Herstellungsverfahren geführt haben.

So ist beispielsweise das Weichlöten per Hand ein aufwändiges Verfahren, da Lötwasser auf die zu verlötenden Teile aufgebracht werden muss und diese auch nicht pulverbeschichtet werden können, da die Einbrenntemperatur des Lacks über der Schmelztemperatur des Lotmaterials liegt. Ferner kann in diesem Verfahren häufig die Einhaltung von Standards hinsichtlich des optischen Erscheinungsbilds der gelöteten Bleche und insbesondere der Lötstellen nicht gewährleistet werden.

Mittels einer Falztechnik gefügte Teile weisen wiederum den Nachteil auf, dass in Abwesenheit einer materialschlüssigen Verbindung Wasser in die Falze eindringen kann, dort gefrieren kann und hierdurch die zusammengefügten Bauteile beschädigt werden können.

Bei einem Rollnahtschweißen mit Überlappstoß sind zusätzliche Arbeitsschritte vonnöten, die das genannte Verfahren langwierig und teuer machen. Insbesondere ist bei beschichteten Bauteilen eine Nahtvorbereitung, beispielsweise ein Abschleifen der Beschichtung, nötig, wodurch zusätzlich ein nachträglicher Korrosionsschutz aufgebracht werden muss. Durch die Tatsache, dass beim Rollnahtschweißen stets ein Überlappstoß notwendig ist, kann sich in den entstehenden Spalten Wasser absetzen, wodurch die oben bereits angesprochenen Beschädigungen der Bauteile bei einem Gefrieren auftreten können. Ferner ist durch den Überlappstoß ein höherer Materialeinsatz notwendig und es ergibt sich häufig ein nicht zufriedenstellendes optisches Erscheinungsbild der geschweißten Bauteile.

Zuletzt muss auch bei mittels eines Lichtbogenschweißens zusammengefügten Zubehörteilen für die Dachentwässerung eine Nahtvorbereitung, beispielsweise ein Abschleifen der Beschichtung, stattfinden, so dass auch hier ein nachträglicher Korrosionsschutz auf die derart hergestellten Teile aufgebracht werden muss. Zudem handelt es sich beim Lichtbogenschweißen von vornherein um ein aufwändiges Verfahren, da es unter einer Schutzgasatmosphäre durchgeführt werden muss, was einen erheblichen Kostenfaktor darstellt. Dies trifft des Weiteren ebenfalls für die eingesetzten Werkzeuge zu, da hier beispielsweise die Schweißdüsen regelmäßig gereinigt werden müssen und die Schweißnadeln ebenfalls regelmäßig nachgeschliffen werden müssen.

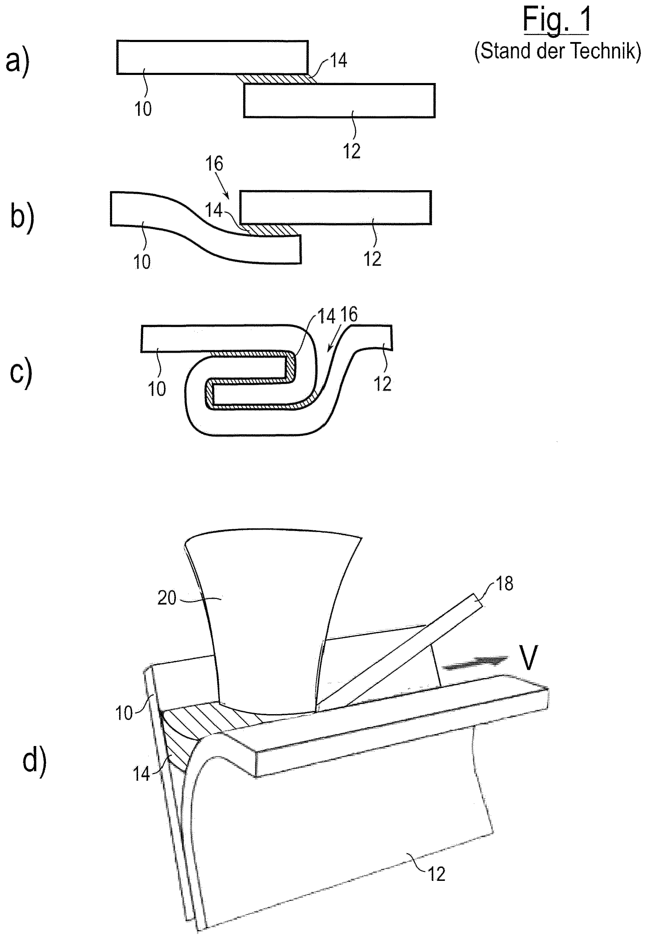

Andererseits ist beispielsweise aus der Automobilindustrie bekannt, Bauteile mittels Laserlöt-Prozessen miteinander zu verbinden. Diese zeichnen sich dadurch aus, dass das Lotmaterial mittels eines gerichteten Laserstrahls aufgeschmolzen wird, was ein präzises und automatisiertes Löten ermöglicht. Aufgrund der in solchen Anwendungsfällen gegebenen Voraussetzungen an die mechanische Festigkeit und Belastbarkeit von Lötverbindungen werden die Nähte hierbei jedoch stets mit einem Überlapp der zu verbindenden Blechteile hergestellt, wie dies beispielsweise in den Figuren 1a bis 1c gezeigt ist, in denen jeweils zwei Blechteile 10 und 12 durch ein Lotmaterial 14 miteinander verbunden sind.

Es zeigt sich hierbei, dass in keinem der gezeigten Beispiele aus den Figuren 1a bis 1c eine durchgehende Kontur der beiden Blechteile 10 und 12 erreicht wird, wobei in den Figuren 1b und 1c weiterhin zu erkennen ist, dass sich bei den dort gezeigten Lötverbindungen zusätzlich Vertiefungen 16 bilden, in denen sich Wasser sammeln könnte, das bei einem Gefrieren die Lötverbindung beschädigen könnte. Ferner wird in diesem Bereich verstärkte Korrosion erwartet.

Insbesondere die in den Figuren 1b und 1c gezeigten gebogenen Bereiche des Blechs 10 (Figur 1b) bzw. beider Bleche 10 und 12 (Figur 1c) stellen zudem eine unansehnliche Verdickung dar, die des Weiteren das Ineinanderstecken von Komponenten zum Herstellen eines Dachentwässerungssystems behindern könnte. Derartig hergestellte Lötnähte sind daher für den Einsatz in Dachentwässerungskomponenten nicht geeignet.

In diesem Zusammenhang zeigt die Figur 1d ferner schematisch den Ablauf eines üblichen Laserlöt-Prozesses, wie er beispielsweise zum Herstellen von Lötnähten in der Automobilindustrie durchgeführt wird. Es handelt sich hierbei um eine sogenannte Kehlnaht, bei der der durch das Lotmaterial 14 aufzufüllende Spalt zwischen den beiden Blechen 10 und 12 nach unten abgeschlossen ist, so dass das Lotmaterial 14 in diese Richtung nicht abfließen kann. Hierbei stellt die in Figur 1d dargestellte Anordnung der beiden Bleche 10 und 12 sowie der Zuführung 18 des Lotmaterials vor dem Aufschmelzen durch den Laserstrahl 20 die übliche Orientierung bei derartigen Lötprozessen dar, d. h. dass sie horizontal in Wannenlage entlang einer durch den Pfeil V bezeichneten Vorschubrichtung ausgeführt werden. Ein weiterer Vorteil des in Figur 1d gezeigten Verfahrens besteht ferner darin, dass durch den Überlapp der Bleche 10 und 12 diese mit einer größeren Toleranz zueinander positioniert werden können, da sich bei einem Abweichen von der relativen Solllage der beiden Blechteile 10 und 12 letztlich lediglich das Maß der Überlappung der beiden Teile 10 und 12 in verlötetem Zustand ändert.

Es ist nun der Verdienst der Erfinder der vorliegenden Erfindung, festgestellt zu haben, dass durch eine Modifikation des oben beschriebenen konventionellen Laserlöt-Prozesses eine Eignung zum Herstellen von Zubehörteilen von Dachentwässerungskomponenten geschaffen werden kann, die anschließend in verlötetem Zustand nicht mehr die Nachteile der in den Figuren 1a bis 1c gezeigten Komponenten aufweisen, wobei ferner die weiter oben diskutierten Nachteile von aus dem Stand der Technik bekannten Verfahren zum Herstellen von Dachentwässerungskomponenten ausgeräumt werden können.

Das erfindungsgemäße Verfahren zum Herstellen von Zubehörteilen von Dachentwässerungskomponenten mittels eines Laserlöt-Prozesses umfasst erfindungsgemäß die folgenden Schritte:
- Bereitstellen von wenigstens zwei vorgeformten Blechteilen mit komplementären Konturen;
- Ausrichten der wenigstens zwei Blechteile derart, dass ihre Konturen eine im Wesentlichen stetige Gesamtkontur bilden, wobei die Blechteile paarweise in wenigstens einem vorbestimmen Stoßabstand ausgerichtet werden; und
- Durchführen eines Laserlötens zur Verbindung der wenigstens zwei Blechteile entlang des wenigstens einen Stoßabstands unter Verwendung eines durch einen Laserstrahl aufzuschmelzenden Lotmaterials.

Es hat sich gezeigt, dass aufgrund der niedrigeren mechanischen Anforderungen an Dachentwässerungskomponenten, verglichen beispielsweise mit den oben diskutierten Anwendungen aus der Automobilindustrie, erfindungsgemäß ein Laserlöten ohne Überlapp der Blechteile durchgeführt werden kann, wobei lediglich der vorbestimmte Stoßabstand der beiden Blechteile während des Lötprozesses durch das aufgeschmolzene und später erstarrende Lotmaterial aufgefüllt wird, um eine sogenannte "I-Naht" zu bilden.

Der in diesem Zusammenhang verwendete Begriff der komplementären Konturen der beiden Blechteile ist derart zu verstehen, dass wenigstens eine der beiden Seiten der beiden Blechteile jeweils derart geformt ist, dass diese gemeinsam einen stetigen Übergang im verlöteten Zustand zwischen den Formen der beiden Teile ermöglichen. Hierdurch wird die für Dachentwässerungskomponenten geforderte optische Qualität einer durchgehenden Kontur ohne Überlappung erreicht, wie sie beispielsweise in den aus dem Stand der Technik bekannten Lötverbindungen aus den Figuren 1a bis 1c vorliegt, so dass im Gegensatz zu diesen mit dem erfindungsgemäßen Verfahren Dachentwässerungskomponenten mit ansprechendem optischen Erscheinungsbild hergestellt werden können. Ferner kann durch den Verzicht auf einen Überlapp der Blechteile Material eingespart werden, so dass der erfindungsgemäße Prozess auch zu einer Kostenreduzierung bei der Herstellung von Zubehörteilen für Dachentwässerungskomponenten führt.

Es ist beim Durchführen des erfindungsgemäßen Verfahrens jedoch unerlässlich, darauf zu achten, dass die wenigstens zwei vorgeformten Blechteile mit niedriger Toleranz exakt zueinander ausgerichtet sind, um den wenigstens einen vorbestimmten Stoßabstand zu bilden. Nur so kann sichergestellt werden, dass der Laserlöt-Prozess aus dem erfindungsgemäßen Verfahren eine ausreichend feste Verbindung zwischen den beiden Blechteilen bewirkt und die gewünschte stetige Kontur der verlöteten Blechteile erreicht wird.

Um diese exakte Ausrichtung der wenigstens zwei Blechteile erreichen zu können, können diese beispielsweise zuvor jeweils in eine entsprechende Spannbacke eingespannt werden.

Alternativ oder zusätzlich kann der Stoßabstand derart gewählt werden, dass er gleich oder kleiner der niedrigsten Blechdicke der wenigstens zwei vorgeformten Blechteile ist. Auf diese Weise kann das aufgeschmolzene Lotmaterial nicht in übermäßigem Maße vor seiner erneuten Verfestigung aus dem Stoßabstand herauslaufen. Entsprechend kann auch die Zufuhr von Lotmaterial entlang des Stoßabstands in einer Weise gesteuert oder geregelt werden, die einerseits den Stoßabstand selbst berücksichtigt und andererseits beispielsweise durch eine optische Kontrolle eine Rückkopplung erlaubt, so dass die zugeführte Materialmenge an Lotmaterial pro Zeit gerade auf den Bedarf zum optimalen Herstellen einer Lötverbindung angepasst werden kann.

Um die geforderte hohe Präzision des Laserlöt-Prozesses aus dem erfindungsgemäßen Verfahren sicherstellen zu können, kann eine Laseroptik zur Bereitstellung des Laserstrahls und/oder eine Lotmaterialzuführung einem Roboterarm zugeordnet sein, welcher den Stoßabstand während des Laserlöt-Prozesses abfährt. Auf diese Weise kann auch eine Integration des erfindungsgemäßen Verfahrens in einen übergeordneten Gesamtprozess vereinfacht werden, so dass ein höherer Automatisierungsgrad erzielt werden kann.

Erfindungsgemäß können zwei der vorgeformten Blechteile entlang mehrerer Stoßabstände miteinander verbunden werden, beispielsweise um ein Zubehörteil mit einem geschlossen Querschnitt zu bilden. Hierbei kann beispielsweise an Stutzen oder Rohre gedacht werden, die beispielsweise aus zwei halbkreisförmigen Blechteilen zusammengelötet werden können, die dementsprechend an gegenüberliegenden Seiten jeweils durch eine Lötnaht miteinander verbunden werden können.

Da es erfindungsgemäß möglich ist, dass gleichzeitig mehrere Lötvorgänge zur Herstellung desselben Zubehörteils durchgeführt werden, kann beispielsweise das eben genannte Zubehörteil mit geschlossenem Querschnitt derart verlötet werden, dass die beiden gegenüberliegenden Lötnähte gleichzeitig gebildet werden, wodurch sich eine Zeitersparnis von annähernd 50 % während ihrer Herstellung erzielen lässt.

Weiterhin ist es in dem erfindungsgemäßen Verfahren im Gegensatz zu beispielsweise dem in Figur 1d dargestellten Verfahren möglich, das Laserlöten wenigstens abschnittsweise im Wesentlichen vertikal verlaufen zu lassen oder eine vertikale Komponente aufweisen zu lassen, da durch den präzise gewählten Stoßabstand zwischen den beiden Blechteilen ein Ablaufen des Lotmaterials nicht zu befürchten ist.

Des Weiteren betrifft die vorliegende Erfindung ein Zubehörteil einer Dachentwässerungskomponente, umfassend wenigstens zwei miteinander durch ein erfindungsgemäßes Verfahren verlötete Blechteile, welche frei von Überlappungen sind. Hierbei können wenigstens zwei der Blechteile gleich stark sein, d. h. eine gleiche Dicke aufweisen, wodurch eine stetige Gesamtkontur auf beiden Seiten der miteinander verbundenen Blechteile gewährleistet werden kann, was in vielen Fällen der gewünschten Optik derartiger Komponenten entspricht.

Weiterhin kann das erfindungsgemäße Zubehörteil wenigstens abschnittsweise einen geschlossenen Querschnitt aufweisen, beispielsweise in Form eines Stutzens oder eines Rohrs, gebildet sein.

Wie bereits angedeutet, lässt sich durch das erfindungsgemäße Verfahren ein Zubehörteil einer Dachentwässerungskomponente herstellen, in welchem wenigstens eines der Blechteile, vorzugsweise sämtliche der Blechteile, aus auch bisher bereits zu diesem Zweck verwendeten Materialien gebildet ist/sind, nämlich aus verzinktem oder farbbeschichtetem Stahl oder einem Titan-Zink-Material.

Weitere Merkmale und Vorteile der vorliegenden Erfindung werden aus der nachfolgenden Beschreibung eines Ausführungsbeispiels deutlich, wenn diese zusammen mit den beiliegenden Figuren betrachtet wird. Diese zeigen im Einzelnen:
Figuren 1a - 1c bereits diskutierte schematische Ansichten von Lötnähten aus dem Stand der Technik;
Figur 1d eine bereits diskutierte schematische Darstellung eines bekannten Laserlöt-Prozesses;
Figur 2 eine Laserlöt-Vorrichtung während eines Durchführens eines erfindungsgemäßen Herstellungsverfahrens; und
Figur 3 eine schematische Darstellung einer Lötnaht in einem erfindungsgemäßen Zubehörteil.

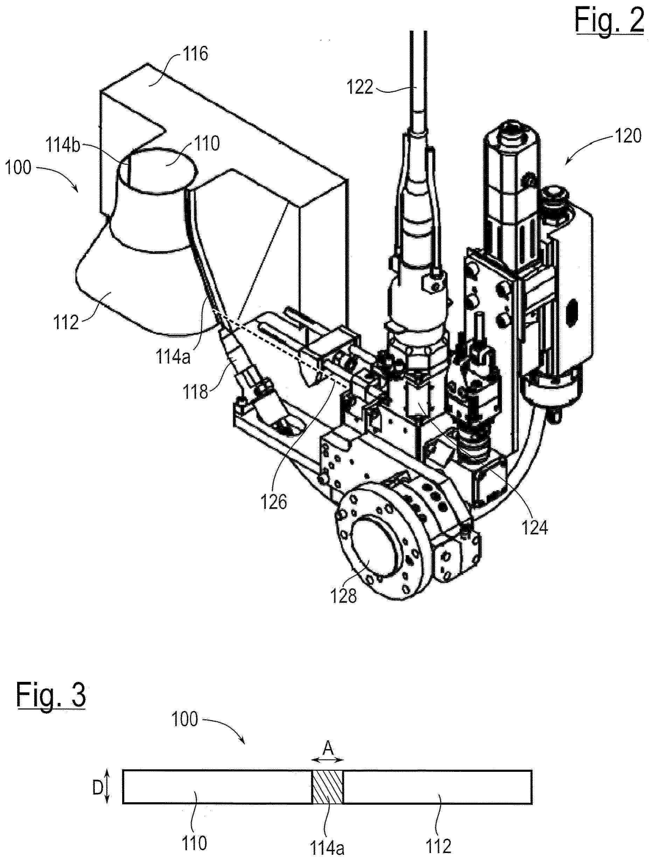

Figur 2 zeigt zwei Blechteile 110 und 112, die miteinander zur Herstellung eines Zubehörteils einer Dachentwässerungskomponente durch einen Laserlöt-Prozess verbunden werden sollen. Das hierdurch entstehende Bauteil 100 weist einen geschlossenen Querschnitt auf und ist in Form eines Stutzens gebildet. Aufgrund des geschlossenen Querschnitts des Bauteils 100 sind zwei Lötnähte 114a und 114b notwendig, wobei in der Darstellung aus Figur 2 momentan die erste Lötnaht 114a ausgeführt wird.

Die Lötnaht 114a verläuft entlang des Stoßabstands der beiden Blechteile 110 und 112, in welchem diese beiden Teile überlappungsfrei mittels zweier Spannbacken gehalten werden, von denen aus Gründen der Übersichtlichkeit jedoch lediglich die Spannbacke 116 dargestellt ist, die das erste Blechteil 110 haltert.

Weiterhin zeigt Figur 2 eine Laserlötvorrichtung 120, die mittels einer Schnittstelle 128 an einem an sich bekannten Roboterarm montierbar ist. Die Vorrichtung 120 umfasst neben der Zuführung 118 für das Lotmaterial einen Lichtleiter 122 sowie eine Laseroptik 124 zum Zuführen und Ausrichten eines Laserstrahls von einer externen Laserquelle. Dieser Laserstrahl ist in der Figur 2 mit dem Bezugszeichen 126 bezeichnet, durch eine gestrichelte Linie dargestellt und auf die auszuführende Schweißnaht 114a gerichtet. Durch die Anbindung an den Roboterarm und geeignete Steuermittel können die Zuführung 118 sowie die Laseroptik 124 in einer geeigneten Weise zur Durchführung des Laserlöt-Prozesses für die Lötnaht 114a angesteuert werden.

Die derart entstehende Naht 114a ist ebenfalls in Figur 3 zwischen Abschnitten der beiden Blechteile 110 und 112 zu erkennen, wobei die Blechteile 110 und 112 in dieser Darstellung im Gegensatz zur Darstellung aus Figur 2 eben dargestellt sind. Es zeigt sich, dass das derart entstehende Bauteil 100 eine durchgehende Kontur im Bereich des Übergangs zwischen den beiden Blechteilen 110 und 112 durch die Lötnaht 114a aufweist, die mittels des in Figur 2 dargestellten Verfahrens hergestellt worden ist. Somit ist das Bauteil 100 aus Figur 3 im Gegensatz zu den in den Figuren 1a bis 1c dargestellten Bauteilen als Zubehörteil einer Dachentwässerungskomponente hinsichtlich der damit verbundenen Voraussetzungen an das optische Erscheinungsbild und die Abwesenheit von Überlappungsbereichen geeignet. Es lässt sich anhand von Figur 3 ebenfalls erkennen, dass der Stoßabstand A der beiden Blechteile 110 und 112 und damit die Abmessung der Lötnaht 114a in dieser Richtung kleiner als die Dicke D der Teile 110 und 112 ist, wodurch während des Lötprozesses ein Auslaufen des Lotmaterials verhindert werden konnte.

## Patentansprüche

1. Verfahren zum Herstellen von Zubehörteilen von Dachentwässerungskomponenten mittels eines Laserlöt-Prozesses, umfassend die folgenden Schritte:
- Bereitstellen von wenigstens zwei vorgeformten Blechteilen (110, 112) mit komplementären Konturen;
- Ausrichten der wenigstens zwei Blechteile (110, 112) derart, dass ihre Konturen eine im Wesentlichen stetige Gesamtkontur bilden, wobei die Blechteile (110, 112) paarweise in wenigstens einem vorbestimmen Stoßabstand (A) ausgerichtet werden;
- Durchführen eines Laserlötens zur Verbindung der wenigstens zwei Blechteile (110, 112) entlang des wenigstens einen Stoßabstands (A) unter Verwendung eines durch einen Laserstrahl (126) aufzuschmelzenden Lotmaterials (114a).

2. Verfahren nach Anspruch 1, wobei zum Ausrichten der wenigstens zwei Blechteile (110, 112) diese zuvor jeweils in eine entsprechende Spannbacke (116) eingespannt werden.

3. Verfahren nach einem der vorhergehenden Ansprüche, wobei der Stoßabstand (A) derart gewählt ist, dass er gleich oder kleiner der niedrigsten Blechdicke (D) der wenigstens zwei vorgeformten Blechteile (110, 112) ist.

4. Verfahren nach einem der vorhergehenden Ansprüche, wobei eine Laseroptik (124) zur Bereitstellung des Laserstrahls und/oder eine Lotmaterial-Zuführung (118) einem Roboterarm zugeordnet sind, welcher den Stoßabstand (A) während des Laserlöt-Prozesses abfährt.

5. Verfahren nach einem der vorhergehenden Ansprüche, wobei zwei der vorgeformten Blechteile (110, 112) entlang mehrerer Stoßabstände verbunden werden, beispielsweise um ein Zubehörteil (100) mit einem geschlossenen Querschnitt zu bilden.

6. Verfahren nach einem der vorhergehenden Ansprüche, wobei gleichzeitig mehrere Lötvorgänge zur Herstellung desselben Zubehörteils (100) durchgeführt werden.

7. Verfahren nach einem der vorhergehenden Ansprüche, wobei das Laserlöten wenigstens abschnittsweise im Wesentlichen vertikal verläuft oder eine vertikale Komponente aufweist.

8. Zubehörteil einer Dachentwässerungskomponente, umfassend wenigstens zwei miteinander durch einen Prozess nach einem der vorhergehenden Ansprüche verlötete Blechteilen (110, 112), welche frei von Überlappungen sind.

9. Zubehörteil nach Anspruch 8, wobei wenigstens zwei der Blechteile (110, 112) gleich stark sind.

10. Zubehörteil nach Anspruch 8 oder 9, welches wenigstens abschnittsweise einen geschlossenen Querschnitt aufweist, beispielsweise in Form eines Stutzens oder eines Rohrs gebildet ist.

11. Zubehörteil nach einem der Ansprüche 7 bis 9, wobei wenigstens eines der Blechteile (110, 112), vorzugsweise sämtliche der Blechteile (110, 112), aus verzinktem oder farbbeschichteten Stahl oder einem Titan-Zink-Material gebildet ist/sind.
